(19) Europäisches Patentamt / European Patent Office / Office européen des brevets

(11) **EP 3 767 284 A1**

(12) **EUROPEAN PATENT APPLICATION**
published in accordance with Art. 153(4) EPC

(43) Date of publication:
**20.01.2021 Bulletin 2021/03**

(51) Int Cl.:
*G01N 23/18* (2018.01)    *G01B 11/00* (2006.01)
*G01N 21/892* (2006.01)

(21) Application number: **19767475.7**

(22) Date of filing: **12.03.2019**

(86) International application number:
**PCT/JP2019/009885**

(87) International publication number:
**WO 2019/176903 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.03.2018 JP 2018047922**

(71) Applicant: **Toray Industries, Inc.**
**Tokyo, 103-8666 (JP)**

(72) Inventor: **WATANABE, Mitsuru**
**Nasushiobara-shi, Tochigi 329-2763 (JP)**

(74) Representative: **Hoefer & Partner Patentanwälte mbB**
**Pilgersheimer Straße 20**
**81543 München (DE)**

(54) **FOREIGN BODY INSPECTING METHOD, INSPECTING DEVICE, FILM ROLL, AND METHOD FOR MANUFACTURING FILM ROLL**

(57)    Provided is a method for inspecting a foreign body for detecting a minute foreign body contained in a film roll into which a film conveyed at high speed is wound up by determining whether or not the foreign body is, for example, a metal foreign body. To achieve the above object, in the method for inspecting a foreign body according to the present invention, a foreign body on a film being conveyed before being wound up into a film roll is detected using an optical imaging unit, a position of the foreign body on the film on plane coordinates is stored in a storing unit, and the position of the foreign body on the plane coordinates is converted into a position of the foreign body in the wound film roll on space coordinates. Subsequently, only the space coordinates for the foreign body in the obtained film roll are focused by a radiation imaging unit such as an X-ray imaging unit, are irradiated with radiation by the radiation imaging unit to detect whether or not the foreign body in the film roll is a metal.

【fig.3】

**Description**

TECHNICAL FIELD

The present invention relates to a method and a device for inspecting a foreign body mixed in a film roll into which a film is wound up, a film roll, and a method for manufacturing the film roll.

BACKGROUND ART

In general, a film such as various kinds of polymer film is supplied as raw web to a manufacturer which uses the film in a state in which the film is wound into a roll. In particular, in a case in which a film having a shorter width than that of the film raw web is to be used, a slit process in which a film is unwound from the raw web roll having a long width and is slit to have a desired film width is performed, and the slit-processed film is wound up into a roll to prepare a film roll. When the slit-processed film is to be used, the film is unwound from the film roll again and is used. Also, in a case in which a film subjected to various surface treatments is to be used, a film is unwound from an untreated film raw web and undergoes the surface treatments, and the treated film is wound up into a film roll. In general, when a surface-treated and slit-processed film is required, a surface-treated film is wound up into a film roll, and the film is unwound from this film roll, undergoes the slit process, and is wound up into a film roll.

In a case in which a film is unwound from a film roll obtained through such a process and is used, a minute foreign body mixed in the film roll may cause a problem. Under such circumstances, it is required to detect the foreign body mixed in the film roll. For example, in a case in which a film unwound from a film roll is used as a battery separator film inserted between a positive electrode and a negative electrode of a lithium ion secondary battery, a foreign body mixed in the film roll is a foreign body on the battery separator film. In a case in which the foreign body is, for example, a minute metal piece, the minute metal piece may cause a short circuit between the positive electrode and the negative electrode in the lithium ion secondary battery or may dissolve in the electrolyte to degrade the battery characteristics. Therefore, there is a need for an inspecting method and device for detecting the minute foreign body mixed in the film roll. For the battery separator film, it is necessary to reliably detect a metal foreign body having a size of 100 $\mu$m or less, for example, about several tens of $\mu$m. However, a non-metal foreign body having no electric conductivity may not cause a problem even in a case in which the foreign body is larger. Therefore, in detection of a foreign body in a film roll for a battery separator film, it is preferable to enable the size and the material or the type of the foreign body to be determined.

Also, by clarifying where in a film roll a foreign body exists, a region in the film having no foreign body can be used, and the film can efficiently be used.

As a method for detecting whether or not a foreign body is contained in a film roll, there is a method for optically inspecting the film being conveyed immediately before being wound up into the film roll with visible light. In this method, the type of the foreign body cannot be determined. Patent Document 1 describes that both visible light and infrared light are used for the optical inspection, and that the type of a foreign body is determined with use of reflected light of the visible light and reflected light of the infrared light. However, in the method described in Patent Document 1, a metal foreign body cannot reliably be distinguished from other foreign bodies, and a detection position with the visible light and a detection position with the infrared light need to be aligned strictly.

Although a method disclosed in Patent Document 2 is not a method for detecting a foreign body in a film roll, Patent Document 2 discloses a method for accurately counting the number of seams in a label continuous body wound in a rolled shape by irradiating the roll with an X-ray from an X-ray source in a direction parallel to a center axis of the roll (a winding center axis) and measuring the intensity of the X-ray transmitted through the roll of the label continuous body. In a case in which a foreign body in a film roll is to be detected with use of this method, an X-ray source and an X-ray detector (an X-ray camera) relatively scan the film roll in a plane perpendicular to the center axis of the roll, and at which position the transmitted X-ray dose is reduced is recorded. However, in order to perform an inspection with high detection accuracy, the distance between the X-ray source and the foreign body needs to be constant. Therefore, the X-ray source must be moved in a direction parallel to the center axis of the roll as well and perform scanning. For this reason, in this method, in a case in which a metal foreign body of, for example, 100 $\mu$m square in the film roll is to be detected, the X-ray irradiation viewing field must be, for example, 10 mm square or less. Therefore, in a case in which the entire film roll is inspected, the inspection time will be extremely long, and it may be difficult to actually perform the inspection. Even in a case in which the entire film roll is inspected, the inspection time is long, and the number of film rolls that can be inspected in the life of one X-ray source is thus limited.

Patent Document 3 discloses a device for inspecting a defect such as chipping of a metal pattern and adhesion of a metal foreign body in a chip size package (CSP) tape, which is a film on which a metal pattern for a semiconductor device is formed. The device includes an optical inspecting device optically imaging and inspecting the CSP tape being unwound and conveyed and an X-ray inspecting device irradiating the CSP tape with an X-ray and inspecting the CSP tape at a position further on a downstream side in a conveying direction of the CSP tape than the optical inspecting device. In the device, the CSP tape that has passed through the X-ray inspecting device is wound up into a roll. In this device, a defect on the tape is detected in the optical inspecting device, and the defect position on the CSP tape detected in the optical inspecting device is then inspected in the X-ray inspecting device, to determine whether or not the defect is caused by adhesion of a metal foreign body.

PRIOR ART DOCUMENTS

PATENT DOCUMENTS

Patent Document 1: Japanese Patent No. 5673621
Patent Document 2: Japanese Patent Laid-open Publication No. 2015-44602
Patent Document 3: Japanese Patent No. 5126645

SUMMARY OF THE INVENTION

PROBLEMS TO BE SOLVED BY THE INVENTION

The device described in Patent Document 3 can distinguish and detect a metal foreign body on a film or a tape being conveyed. However, since it is difficult for the X-ray inspecting device to detect a minute defect on an object conveyed at high speed of 10 m/minute or faster, the conveying speed of the film or the tape must be limited. That is, in order to inspect the film at a practically applicable level, it is necessary to convey the film at, for example, several tens of m/minute to 100 m/minute. However, the device described in Patent Document 3 cannot achieve such high conveying speed.

An object of the present invention is to provide an inspecting method enabling a minute foreign body mixed in a film roll into which a film conveyed at high speed is wound up, as well as whether or not the foreign body is, for example, a metal foreign body, to be reliably detected, an inspecting device for use in this inspecting method, a film roll manufactured through this inspecting method, and a method for manufacturing a film roll.

SOLUTIONS TO THE PROBLEMS

That is, the present invention is a method for inspecting a foreign body mixed in a film roll, including a first foreign body detecting process for detecting a foreign body on a film being conveyed before being wound up into the film roll with using an optical imaging unit and obtaining foreign body information including at least positional information A on the film (plane coordinates) for the foreign body, a process for winding up the film on a core as the film roll after the first foreign body detecting process, a converting process for converting a position of the foreign body on the positional information A (plane coordinates) into positional information on positional information B in the wound film roll (space coordinates), and a second foreign body detecting process for using a radiation imaging unit to the film roll, focusing the radiation imaging unit to adjust imaging focus on a foreign body targeted for detection and characterization based on the positional information B (space coordinates) for the foreign body, and emitting radiation by means of the radiation imaging unit to detect and characterize the targeted foreign body.

Further, provided is the method for inspecting a foreign body, including an inspection result mapping process for, after the second foreign body detecting process, associating a characterization result in the second foreign body detecting process with the position of the foreign body on the positional information A (plane coordinates) and storing the association as an inspection result. Further, provided is the method for inspecting a foreign body, wherein, before the converting process, at least three processes are performed out of a process for measuring a total winding length of the film wound up into the film roll, a process for measuring an outer radius of the core, a process for measuring an outer radius of the film roll into which the film is wound up, and a process for measuring a winding number of the film in the film roll, and wherein the converting process is performed based on a measurement result obtained in the at least three processes.

The present invention is also an inspecting device inspecting a foreign body mixed in a film roll into which a film is wound up, including an optical imaging unit imaging a film being conveyed before being wound up into the film roll, an image processing unit detecting a foreign body from an image captured in the optical imaging unit, a storing unit storing foreign body information including at least a position of the foreign body on positional information A on the film (plane coordinates) for the foreign body detected in the image processing unit, a converting unit converting the position of the foreign body on the positional information A (plane coordinates) into a position of the foreign body on positional information B on the wound film roll (space coordinates), a radiation imaging unit detecting radiation emitted from a radiation source and performing imaging, a focusing unit moving the radiation source to the film roll to focus the radiation imaging unit in order for the position of the foreign body on the converted positional information B (space coordinates) to be focused on for imaging; and a characterizing unit detecting and characterizing the foreign body based on radiation intensity of the radiation imaging unit.

The present invention also provides a film roll into which a film is wound up, including an inspection appendix describing association of a position of a foreign body based on a result of foreign body detection optically performed on the film being conveyed before being wound up into the film roll with a result of characterization for the foreign body performed by irradiating the film roll with radiation.

The present invention is also a method for manufacturing a film roll including a process for manufacturing a film roll by a process for winding up a film, including a process for inspecting a foreign body by means of the method for inspecting a foreign body according to the present invention, wherein the first defect detecting process is performed before the process for winding up the film, and wherein the second defect detecting process is performed after the process for winding up the film.

EFFECTS OF THE INVENTION

According to the present invention, a film being conveyed before being wound up into a film roll is subjected to optical foreign body detection, a position of the foreign body in the film roll is calculated based on a result of the foreign body detection, and the foreign body is focused for imaging and is detected using radiation. Accordingly, a region to be inspected using the radiation to determine whether the foreign body is a metal or a nonmetal can be minimum, and the foreign body can be detected and characterized accurately. Accordingly, a minute foreign body mixed in a film roll into which a film conveyed at high speed is wound up can reliably be detected by determining whether or not the foreign body is, for example, a metal foreign body in a short time.

BRIEF DESCRIPTION OF THE DRAWINGS

Fig. 1 is a configuration diagram illustrating a foreign body inspecting device according to an embodiment of the present invention.
Figs. 2(a) and 2(b) are conceptual diagrams describing an example of a coordinate converting method in a film roll.
Fig. 3 is an operation diagram describing a method for inspecting a foreign body.
Fig. 4 is an operation diagram describing focusing in a radiation imaging unit.
Fig. 5 is a schematic view illustrating an inspection region in an orthogonal coordinate system on a film roll.
Fig. 6 is a schematic view illustrating an inspection region in a polar coordinate system on a film roll.
Fig. 7 is a flowchart for deriving respective driving amounts in a film roll.

EMBODIMENTS OF THE INVENTION

To facilitate understanding of components and characteristics disclosed in the present invention, an overview of the present invention will briefly be described first. A first foreign body detecting process for detecting a foreign body on a film being conveyed is performed, and foreign body information including at least positional information of the detected foreign body (plane coordinates) is acquired. The film is wound around a core into a film roll. Subsequently, the positional information of the foreign body (plane coordinates) is converted into positional information of the foreign body (space coordinates) in the film roll based on the foreign body information, information about the wound film roll, and the like (converting process). At this time, the positional information of the foreign body (space coordinates) is preferably converted into positional information parameters suitable for a second inspection of the film roll. In this converting process, at which portion of the film roll the foreign body mixed into the film is located is specified, and an inspection region in a second foreign body detecting process performed to the film roll is determined. For the inspection region determined with use of the positional information of the foreign body (space coordinates), focusing is performed with use of the positional information of the foreign body (space coordinates) so as to focus on the foreign body located at the inspection region, the second foreign body detecting process is performed, and the foreign body is detected and characterized (characterization). Accordingly, in the second foreign body detecting process, since the mixed foreign body can be inspected without the need to inspect the entire film roll again, an inspection time for the second foreign body detecting process is significantly shortened. Also, since a radiation imaging unit is focused on the foreign body mixed in the film roll, the minute foreign body can accurately be detected and characterized. Further, since the process is performed independently of a film winding process, the productivity is not lowered. In this manner, provided is an inspecting method enabling a minute foreign body mixed in a film roll into which a film conveyed at high speed is wound up to be reliably detected and characterized by determining whether or not the foreign body is, for example, a metal foreign body.

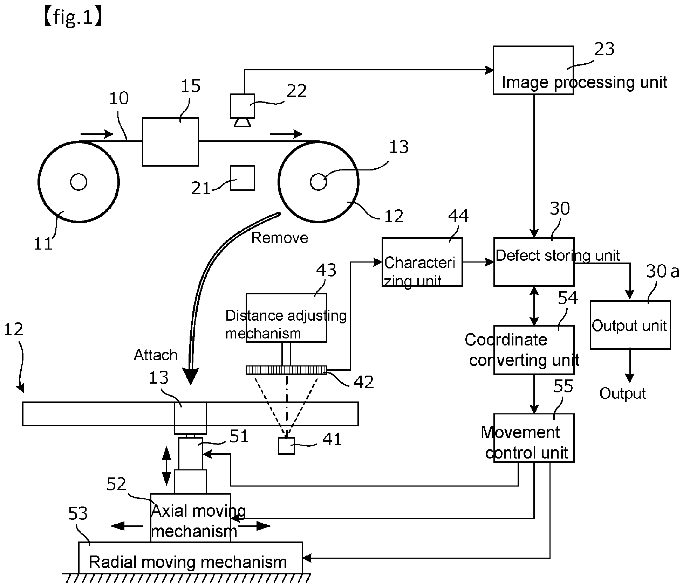

Next, a preferred embodiment of the present invention will be described with reference to the drawings. Fig. 1 illustrates a configuration of a foreign body inspecting device according to an embodiment of the present invention. This foreign body inspecting device detects a foreign body in a film roll into which a film has been wound up to characterize the foreign body by determining whether the foreign body is, for example, a metal or a nonmetal and is used in a process for manufacturing a battery separator film inserted between a positive electrode and a negative electrode of a secondary battery, for example.

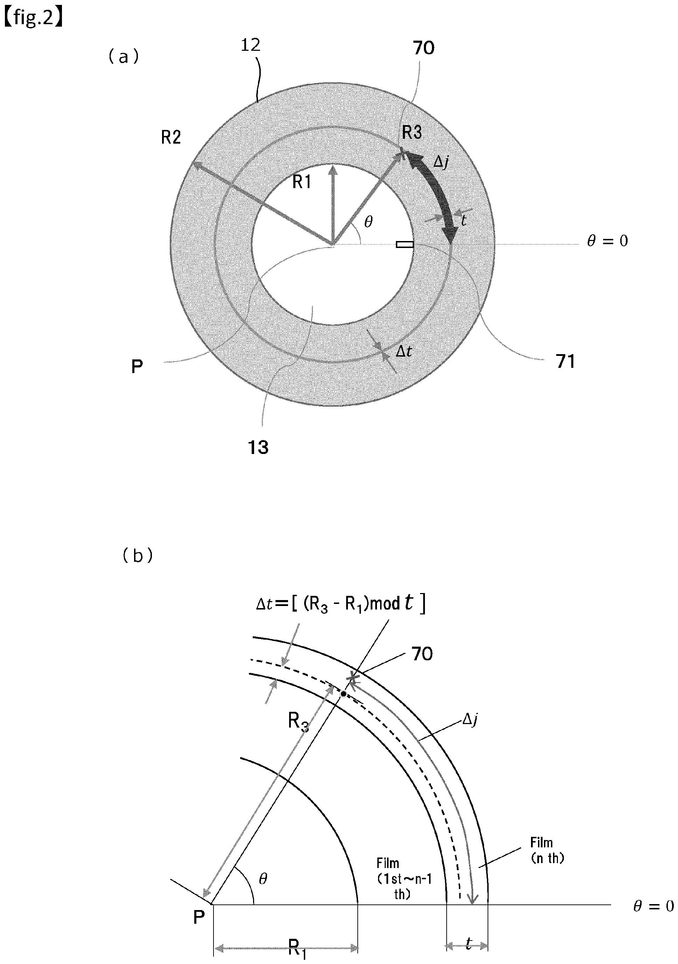

In Fig. 1, a raw web of a translucent film 10 such as a battery separator film is wound into an unwinding roll 11. The thickness of the film 10 is 3 to 30 $\mu$m, preferably 3 to 20 $\mu$m. The raw web of the film 10 is unwound from the unwinding roll 11, is conveyed in the arrow direction illustrated in the figure (a direction from the left side to the right side), is slit-processed by a slitter 15 to have a predetermined width, and is wound up into each film roll 12 having the width after the slit process. Meanwhile, although only one film roll 12 is drawn in Fig. 1, a plurality of film rolls 12 are arranged. A final end of the film 10 is secured to an outer circumferential portion of the film roll 12 by a securing tool such as a tape. The film roll 12 is driven to rotate by a not-illustrated winding motor. In the film roll 12, the film 10 is wound up on a cylindrical core 13 connected to a rotation shaft of the winding motor. As illustrated in Fig. 2, a marker 71 for identifying a winding start position and a winding direction of the film 10 is attached to one of both side surfaces of the core 13 as an identifying unit. Although the marker 71 is made of a metal plate in this example, the marker 71 may be made of a nonmetal such as a resin material as described below.

The marker 71 is provided at a position away from the center of a circle, which is the side surface of the core, to the outer circumferential side. Therefore, when winding of the film 10 is started at a position close to the marker 71, the winding start position of the film 10 can be determined after the winding of the film 10. Also, the core 13 is configured so that the end portion to which the marker 71 is attached is arranged on one side (the right side or the left side) as viewed from the side provided with the unwinding roll 11, and the winding directions of the film 10 with respect to the markers 71 are equal in the multiple film rolls 12. The conveying speed of the film 10 conveyed through the slitter 15 is several tens of m/minute to 100 m/minute. The film 10 wound up into the film roll 12 is elongated with a conveying direction at the time of winding being a longitudinal direction (MD direction). Here, a direction perpendicular to the conveying direction of the film 10 is referred to as a width direction (TD direction) of the film 10.

Between the slitter 15 and the film roll 12, a light source 21 for generating visible light and a camera 22 serving as an optical imaging unit are arranged with the film 10 interposed therebetween to optically detect a foreign body adhering to the film 10 being conveyed from the unwinding roll 11 toward the film roll 12, and the light source 21 and the camera 22 constitute an optical imaging unit. The optical imaging units are provided at a plurality of locations along the width direction in order to detect a foreign body over the width direction of the film 10. The optical imaging section performs imaging immediately before winding up the raw web into the roll or immediately before winding up the film on the core after slitting. The timing "immediately before" is a timing before the film is wound up into a roll and is preferably a timing after the film comes into contact with another roll or the like and before the film comes into contact with the winding roll. In the present specification, the plurality of optical imaging units will be described collectively as "the light source 21" and "the camera 22".

The camera 22 images light emitted from the light source 21. In a case in which there is a foreign body on the film 10, the foreign body blocks the light. Therefore, the foreign body is detected as a dark defect in an image captured by the camera 22. A scattering optical system, in which the light source 21 and the camera 22 are arranged on the same side with respect to the film 10, may constitute the optical imaging unit although the scattering optical system is not illustrated. In this case, a foreign body causing visible light emitted from the light source 21 to scatter is to be imaged by the camera 22 and thus may be detected as a bright defect. Also, the optical imaging unit may be configured to binarize a color image captured by the camera 22 to determine a foreign body.

Also, the foreign body inspecting device is provided with an image processing unit 23 into which a captured image captured by the camera 22 is input. The image processing unit 23 performs image processing on the captured image, extracts a dark defect in the image, and detects a foreign body. At this time, the size of the foreign body may be detected. The camera 22 continuously images the film 10 being conveyed and sends the captured images to the image processing unit 23. The position of a foreign body in the longitudinal direction of the film 10 is determined based on at which time in the captured images the foreign body has been detected (elapsed time from the start of imaging or a length measuring instrument). Also, the position of a foreign body in the width direction of the film 10 is determined based on the position of the foreign body in the width direction in the captured image. Accordingly, when plane coordinates in which the longitudinal direction of the film 10 is an x axis while the width direction thereof is a y axis are considered, the position of the foreign body on the plane coordinates is determined. The position of the foreign body on the plane coordinates is the position of the foreign body on a plane obtained when it is assumed that the film 10 is unwound and extended on the plane. This positional information is referred to as positional information A on the film (plane coordinates). Meanwhile, in a case of using the length measuring instrument, pulse signals continuously generated in the length measuring instrument are summed up from the time unwinding of the film 10 is started, and the sum of the pulse signals is read out at the same time as detection timing of the foreign body and is recorded as length information for the film 10 in the longitudinal direction.

The foreign body inspecting device is provided with a defect storing unit 30 such as a memory for storing a position of a detected foreign body and the like, and the image processing unit 23 stores the position of the foreign body detected on the film 10 on the aforementioned plane coordinates in the defect storing unit 30 as defect information. At this time, information about the size of the foreign body may be included in the defect information. Note that such a defect storing unit 30 may not be provided, but the defect information may be stored in a working memory to perform below-mentioned processing.

After the optical detection of the foreign body on the film 10 using the light source 21 and the camera 22 is completed, the film roll 12 obtained by winding up the film 10 is subjected to detection of the foreign body and characterization in terms of the type and the material of the foreign body (for example, determination of whether the foreign body is a metal or a nonmetal) by means of an X-ray described below. For this purpose, the foreign body inspecting device includes an X-ray source 41 and an X-ray imaging unit 42 imaging an X-ray emitted from the X-ray source 41. The X-ray source 41 and the X-ray imaging unit 42 constitute a radiation imaging unit. The X-ray source 41 emits an X-ray radially (that is, in a conical shape) as illustrated by the two dashed straight lines. As a result, at a position of the X-ray closer to the X-ray source 41, the viewing field is narrower, and the foreign body detection sensitivity is higher. In general, in a case in which the distance between the X-ray source 41 and a foreign body is a focus to object distance (FOD), and in which the distance between the X-ray source 41 and the X-ray imaging unit 42 is a focus to image distance (FID), and in which the FID is constant, the foreign body detection sensitivity is proportional to a ratio of the FID to the FOD, FID/FOD, and the size of the imaging field is inversely proportional to FID/FOD. Therefore, to inspect a foreign body with high detection sensitivity and equal detection sensitivity, the imaging focus is required to be adjusted so that the FID/FOD may be high (the viewing field may be narrow) and so that the FID and the FOD may be constant. Here, to detect a minute metal foreign body having a size of about 100 $\mu$m by means of X-ray imaging, it is necessary to reduce the viewing field of the X-ray source 41 to 10 mm square or less. However, the size of the film roll 12 is much larger than the viewing field of the X-ray source 41. Therefore, to inspect the entire film roll, it is necessary to move the film roll 12 relatively to the X-ray source 41. This operation is included in the adjustment for the X-ray imaging focus on the foreign body. Therefore, the foreign body inspecting device is provided with a focusing unit including a motor 51, an axial moving mechanism 52, a radial moving mechanism 53, and a movement control unit 55 to adjust the imaging focus in the radiation imaging unit. A depth range of the imaging focus in the X-ray source 41 (allowable range of variation in detection sensitivity) according to the present invention is, for example, $\pm$15 mm, preferably $\pm$5 mm, and more preferably $\pm$1 mm. In a case in which a plurality of foreign bodies exist in this range, the plurality of foreign bodies may be imaged simultaneously by one X-ray imaging. In this case, the inspection time is shortened because only one imaging is required. However, the detection sensitivity is not constant when the FOD is different as described above. Therefore, the depth range is determined based on the allowable range of variation in sensitivity and the inspection speed. Meanwhile, the X-ray source 41, the X-ray imaging unit 42, the motor 51, the axial moving mechanism 52, the radial moving mechanism 53, and the movement control unit 55 are covered with a casing that prevents leakage of the X-ray, and description of the casing is omitted here. Further, radiation emitted from the X-ray source 41 may be a $\gamma$-ray or the like instead of the X-ray.

That is, the film roll 12 into which the film 10 has been wound up is subjected to foreign body detection by means of the optical imaging unit and is then removed from a winding motor (not illustrated) by an operator, for example, and the core 13 of the film roll 12 is connected to a rotation shaft of the motor 51. In other words, the film roll 12 is attached to the motor 51 in a state in which the core 13 erects in the vertical direction. Therefore, the motor 51 is provided so that a rotation axis of the motor 51 and an irradiation center axis of the X-ray emitted from the X-ray source 41 (dashed-dotted line in the figure) may be parallel to each other. Consequently, an axis of the film roll 12 (i.e., a center axis of the core 13) is parallel to the irradiation center axis of the X-ray, and a part of the film roll 12 resides in a space between the X-ray source 41 and the X-ray imaging unit 42. The above-described marker 71 has a configuration in which the film roll 12 is attached to the rotation shaft of the motor 51 so that the marker 71 may similarly reside in the space and so that the marker 71 may be located at a set position (an upper end or a lower end) in the film roll 12. That is, in a case in which the marker 71 is not provided at the set position at the time of below-mentioned imaging of the X-ray, an error is generated, and the position of the marker 71 is set so that the winding direction of the film 10 may be, for example, counterclockwise (left-handed) on the motor 51. Also, since the position of the marker 71 can be obtained on the captured image of the X-ray, the winding start position of the film 10 on the core 13 is found.

The motor 51 is attached to the axial moving mechanism 52 that moves the motor 51 in a direction of the rotation axis of the motor 51 (up-down direction in the figure), and the axial moving mechanism 52 is attached to the radial moving mechanism 53 that moves the axial moving mechanism 52 in a radial direction of the film roll 12 (right-left direction in the figure). The driving amounts of the motor 51, the axial moving mechanism 52, and the radial moving mechanism 53 are controlled by the movement control unit 55. When the radial moving mechanism 53 is driven, a measurement position in an arbitrary radial direction of the film roll 12 can be adjusted. In this state, when the film roll 12 is rotated around the vertical axis by the motor 51, the X-ray can be emitted to the film roll 12 in a region along a circumference of the above-described measurement position defined by the radial moving mechanism 53, and a region on the circumference to be irradiated with the X-ray can be set by a rotation angle of the motor 51. Further, when the film roll 12 is moved in the up-down direction in the figure by the axial moving mechanism 52, the depth of the X-ray irradiation focus can be adjusted, in other words, the distance between the foreign body caught in the film roll 12 and the X-ray source 41 can be kept constant.

As described above, the film roll 12 resides in the space between the X-ray source 41 and the X-ray imaging unit 42, and the film roll 12 approaches the X-ray source 41 or the X-ray imaging unit 42 in this space by means of the axial moving mechanism 52. While the same film roll 12 is being inspected by means of the X-ray, the distance between the X-ray source 41 and the X-ray imaging unit 42 is kept constant. However, the thickness of the film roll 12, that is, the width of the film 10 wound up into the film roll 12, can vary depending on the type and specification of the film 10. Therefore, a distance adjusting mechanism 43 that adjusts the distance between the X-ray source 41 and the X-ray imaging unit 42 is provided to accommodate the film rolls 12 having different thicknesses. In the illustrated example, in a state in which the position of the X-ray source 41 is fixed, the X-ray imaging unit 42 can be moved close to and away from the X-ray source 41 by the distance adjusting mechanism 43. However, the X-ray source 41 may be moved up and down with respect to the X-ray imaging unit 42.

In the present embodiment, instead of performing foreign body detection by means of the X-ray on the film 10 being conveyed, foreign body detection by means of the X-ray is performed on the film roll 12 into which the film 10 is wound up. In addition, the range in which the foreign body detection by means of the X-ray is performed is limited to the position in which the presence of the foreign body has been confirmed by the optical imaging unit. Consequently, time required for the foreign body detection by means of the X-ray is significantly shortened. The position of the foreign body detected in the optical imaging unit is expressed as plane coordinates as described above. On the other hand, since the film roll 12 is formed in a cylindrical shape in which the film 10 is wound around the core 13, the position of the foreign body in the film roll 12 needs to be expressed as space coordinates. This positional information is referred to as positional information B in the film roll 12 (space coordinates). The positional information A and the positional information B are each positional information of the same foreign body and differ in terms of whether the position of the foreign body is expressed on the film or in the film roll. Therefore, a coordinate converting unit 54 is provided for converting the position as the positional information A on the film 10 (plane coordinates) into the position as the positional information B in the film roll 12 (space coordinates). The coordinate converting unit 54 converts the position of the foreign body as the positional information A on the film 10 (plane coordinates) stored in the defect storing unit 30 into the position of the foreign body as the positional information B in the film roll 12 (space coordinates). Since the film roll 12 is formed by winding the film 10 around the core 13, the conversion of the positional information A on the film 10 (plane coordinates) into the positional information B in the film roll 12 (space coordinates) can be performed easily in a case in which information for coordinate conversion including the diameter of the core 13, the thickness of the film 10, the thickness of an air layer interposed between the films laminated in the up-down direction, and the winding start position and the winding direction (clockwise or counterclockwise) of the film 10 around the core 13 is given. Accordingly, as for a posture (direction) of the film roll 12 to be attached to the motor 51, the marker 71 indicating the winding start position is formed on the end surface of the core 13 so that the winding start position and the winding direction of the film 10 around the core 13 may not vary according to the film roll 12 but may be set uniformly. An origin in the positional information B in the film roll (space coordinates) is set, for example, at a lower end position of an axial center of the core 13. Also, the positional information B (space coordinates) may be coordinates in an orthogonal coordinate system (x, y, z) using a lengthwise direction (x coordinate), a lateral direction (y coordinate), and a vertical direction (z coordinate) or coordinates in a polar coordinate system (r, $\theta$, z) including respective driving amounts of a moving amount in the radial direction (r coordinate) by the radial moving mechanism 53, a rotation angle ($\theta$ coordinate) by the motor 51, and an elevating amount in the vertical direction (z direction) by the axial moving mechanism 52.

Here, an example of a method for converting the positional information A (plane coordinates) into the afore-mentioned polar coordinates (r, $\theta$, z) including the respective driving amounts will be described in detail. Fig. 2 is a plan view of the film roll 12 as viewed from a side (from a surface side perpendicular to the center axis of the core 13) for describing such a conversion method. In Fig. 2, the aforementioned marker 71 is an index for indicating the winding start position and the winding direction of the film 10. A foreign body X is illustrated as a foreign body 70 in Fig. 2. Next, the definition of each dimension required for converting the plane coordinates into the polar coordinates will be described.

When a total winding length of the film 10 from the winding start position, to which the marker 71 is attached, to a winding end position is referred to as L, the total winding length L is a known value since the total winding length L is measured with use of, for example, the aforementioned length measuring instrument. For example, the total winding length L is derived as $L = L_2 - L_1$ with use of an indicated value $L_1$ in the length measuring instrument at the start of winding and an indicated value $L_2$ in the length measuring instrument at the end of winding, and a point of $L = 0$ is an origin along the x axis on the plane coordinates on the film. Further, an outer radius $R_1$ of the core 13 (an inner radius of the donut-shaped region in the film roll 12 formed by winding the film 10) is obtained by measuring an outside diameter of the core 13 in advance. An outer radius $R_2$ of the film roll 12 is measured with use of a non-contact dimension measuring instrument such as a displacement meter after the film 10 is wound up. A winding length j of the film 10 from the winding start position to a position to which the foreign body 70 has adhered has already been detected as the positional information A (plane coordinates) in the first foreign body detecting process.

On the other hand, a length derived as a distance from a center P of the core 13 to the foreign body 70 is $R_3$, and a distance between an outer surface out of inner and outer surfaces of one film 10 wound around the core 13 and an outer surface of the other film 10 wound on the outer side of the film 10 is t. That is, when the film 10 is wound around the core 13, the air layer is interposed between the lower film 10 and the upper film 10. Therefore, the aforementioned thickness t is a dimension obtained by adding the thickness of the film 10 to the thickness of the air layer interposed between the films.

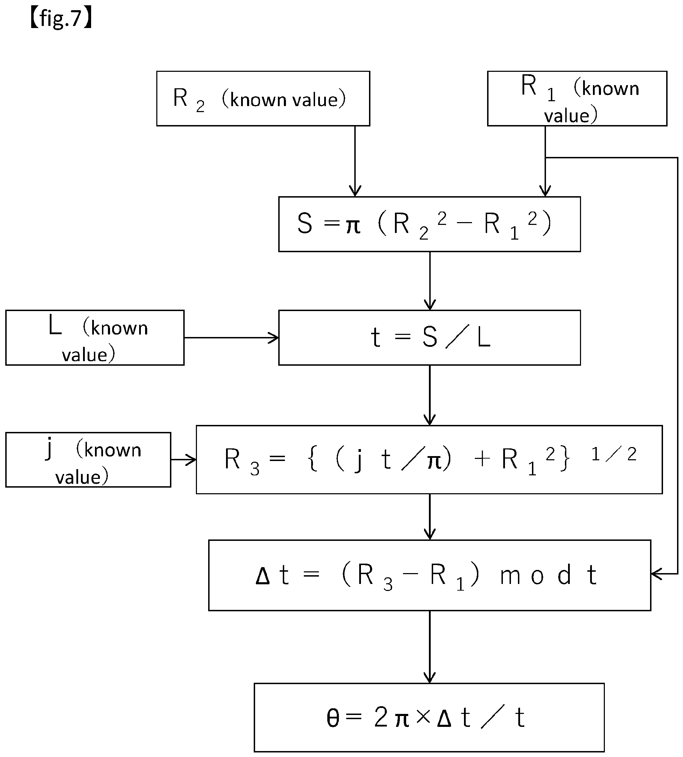

Also, in Fig. 2, among angles formed by a straight line passing through the marker 71 and the center P of the core 13 and a straight line passing through the center P and the foreign body 70, an angle in a direction along the winding direction of the film 10 is $\theta$ (rad) (in Fig. 2, the film 10 is wound counterclockwise, that is, left-handed). Also, in a film (n-th layer) of the wound film roll in which the foreign body 70 exists, a length of the film having an angle of $\theta$ is defined as $\Delta j$. Next, a calculation method for converting coordinates based on the definition of each dimension described above will be described. Fig. 7 is an example of a flowchart for deriving the respective driving amounts ($R_3$ and $\theta$) for inspecting a foreign body in the film roll. Hereinbelow, the details will be described.

In Fig. 2, an area S of the donut-shaped region in which the film 10 is wound is a value obtained by subtracting an area of a circle having the inner radius $R_1$ from an area of a circle having the outer radius $R_2$ and is expressed as follows:

$$S = \pi (R_2{}^2 - R_1{}^2) \ \dots \ (1).$$

On the other hand, the aforementioned area S is equivalent to an area of a side surface when an elongated object having the film thickness t (thin film including the film 10 and the air layer) is wound over the length L and is expressed as follows:

$$S = Lt \ \dots \ (2).$$

When the above equations (1) and (2) are combined and changed in form, the following equation is obtained:

$$t = \pi (R_2{}^2 - R_1{}^2)/L \ \dots \ (3).$$

When the length $R_3$ derived as the distance from the center P of the core 13 to the foreign body 70 is considered in a similar manner to those in the equations (1) and (2), the following equation is obtained:

$$\pi (R_3{}^2 - R_1{}^2) = jt \ \dots \ (4).$$

Meanwhile, as illustrated in Fig. 2, the length $R_3$ derived as the distance from the center P of the core 13 to the foreign body 70 is a length derived as a distance between an arc (dashed line in Fig. 2(b)), obtained when a cross-sectional area of a film corresponding to the film length $\Delta j$ from a point at which $\theta = 0$ to a place at which the foreign body 70 exists is leveled on the entire circumference, and the center P. When the equation (4) is rearranged, the following equation is obtained:

$$R_3 = \{ (jt/\pi) + R_1{}^2 \}^{1/2} \ \dots \ (5).$$

When the film thickness t in the aforementioned equation (3) is substituted into the equation (5), all of the right-hand side values in the equation (5) are known values, and r($R_3$) among the polar coordinates (r, $\theta$, z) of the foreign body 70 is thus derived.

The aforementioned length $\Delta j$ of the arc passing through the foreign body 70 is expressed as follows using a circumference of a circle having a radius of the length $R_3$ derived as the distance to the foreign body 70 and the central angle $\theta$ :

$$2\pi R_3 \times \theta/2\pi \approx \Delta j \ ... \ (6).$$

Therefore, the central angle $\theta$ is expressed as follows:

$$\theta \approx \Delta j/R3 \ ... \ (7).$$

Here, the relationship between the length $R_3$ derived as the distance from the center P of the core 13 to the foreign body 70 and the central angle $\theta$ will be described in detail. The central angle $\theta$ is an angle formed by a line connecting the foreign body to the center of the core and a line connecting the marker to the center. At this time, when the length of the film from a point at which $\theta = 0$ in a layer on which the foreign body exists to a place at which the foreign body 70 exists is $\Delta j$, the cross-sectional area of the film having a length of $\Delta j$ is $\Delta j \times$ film thickness t, and the following equation is derived from the equation (7):

$$\Delta j \times t \approx R_3 \theta t \ ... \ (8).$$

On the other hand, as illustrated in Fig. 2(b), $R_3$ corresponds to a radius when the film is wound having a length from the winding start point to the place at which the foreign body exists. Hence, in the actual film roll, the cross-sectional area of the film from the point at which $\theta = 0$ to the place at which the foreign body exists is derived as follows:

$$\pi R_3{}^2 - \pi[R_3 - (R_3 - R_1) \ \mathrm{mod}t]^2.$$

When this is put in order, the cross-sectional area is derived as follows:

$$\pi\{2R_3 \times [(R_3 - R_1) \ \mathrm{mod}t] - [(R_3 - R_1) \ \mathrm{mod}t]^2\} \approx 2\pi \times R_3$$

$$\times [(R_3 - R_1) \ \mathrm{mod}t]).$$

From this, $\theta \approx 2\pi \times [(R_3 - R_1) \ \mathrm{mod}t]/t$ is derived. Note that mod means a modulus operator, and from [a mod b], a modulus obtained by dividing a by b is output.

Among the polar coordinates $(r, \theta, z)$, the coordinate $(z)$ in the height direction is a position of the foreign body 70 in the width direction of the film 10 and have already been imaged by the aforementioned camera 22. Therefore, the three coordinates of the polar coordinates are determined.

In the present example, the information for coordinate conversion used to convert the plane coordinates into the space coordinates includes six variables including the winding start position of the film 10 on the core 13, the winding direction, the total winding length L of the film 10, the outer radius $R_1$ of the core, the outer radius $R_2$ of the film roll 12, and the winding length j. The winding start position and the winding direction are known when the marker 71 is read, and when the core 13 is connected to the motor 51. Next, description of the device will be resumed.

The position of the foreign body on the space coordinates converted in the coordinate converting unit 54 is notified to the movement control unit 55, and the movement control unit 55 controls the motor 51, the axial moving mechanism 52, and the radial moving mechanism 53 so that the foreign body may be focused for imaging based on the position of the foreign body on the space coordinates. Actually, there is a case in which, due to factors such as variation in the thickness of the film 10 and stretch of the film 10 when the film 10 is wound, the position of the foreign body on the space coordinates calculated in the coordinate converting unit 54 and the position thereof on the actual film roll 12 do not match. Even in such a case, since the radius of the film roll is much longer than the film thickness, the length $R_3$ (i.e., the dimension in the radial direction) derived as the distance between the foreign body and the center axis of the film roll 12 is calculated almost accurately. Accordingly, the radial moving mechanism 53 can be driven based on the calculated position, and in this state, the film roll 12 can be rotated by the motor 51 once to perform an inspection by means of the X-ray. In this case, the inspection by means of the X-ray is performed in the circumferential direction along the circumference defined by the calculated radius. In this case, it is preferable to use the polar coordinate system rather than the orthogonal coordinate system as the space coordinates and the moving mechanism because of the following reasons.

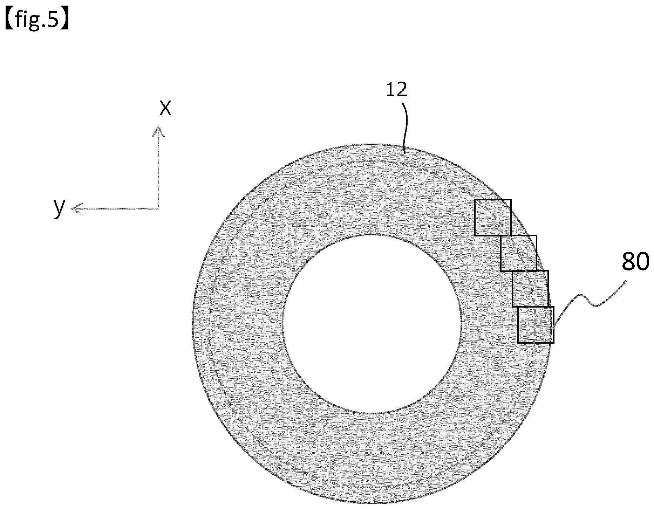

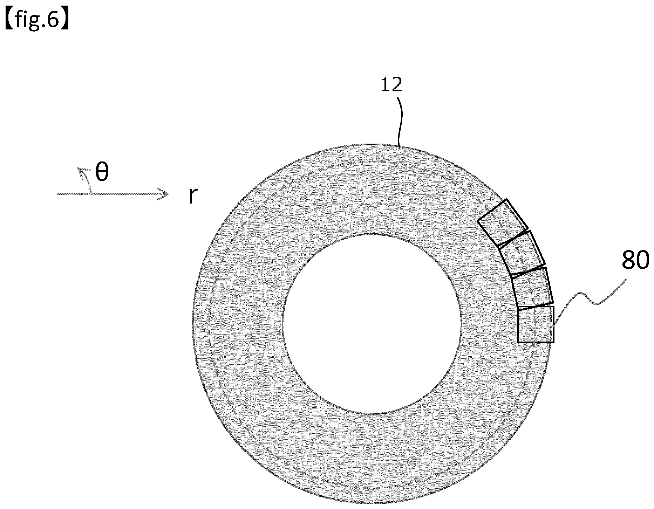

Fig. 5 is a schematic view illustrating a case in which the viewing field is sequentially moved along the circumference near the outer periphery of the film roll in the orthogonal coordinate system. In this case, when the viewing field is moved to the next region, the viewing field needs to be moved in the directions of both the x and y axes almost every time, which causes the control to be complicated. Also, since the film has lower X-ray transmittance than the air, the image has a brightness pattern in the radial direction in which the space outside the film roll is bright while the space inside the film roll is dark. In the case of Fig. 5, the direction of the brightness pattern changes according to the position of the viewing field, and image processing for automatically detecting the foreign body is complicated. Conversely, Fig. 6 illustrates a similar case in which the viewing field is moved on the circumference in the polar coordinate system. Once the radius is adjusted to the calculated radius, the viewing field has only to be moved in the direction of the θ axis with r constant. Therefore, the control is simple. Also, since the direction of the brightness pattern in the image is fixed, the image processing is relatively simple. Meanwhile, in a case in which the size of the foreign body is figured out in the foreign body detection by means of the optical imaging unit, the inspection by means of the X-ray may be performed only on the foreign body having a size exceeding a predetermined threshold value (for example, 100 μm).

Also, the foreign body inspecting device is provided with a characterizing unit 44 processing an X-ray captured image acquired by the X-ray imaging unit 42 and characterizing the foreign body. The X-ray is strongly blocked when the foreign body is a metal but is hardly blocked when the foreign body is a nonmetal. Therefore, the characterizing unit 44 performs image processing on the X-ray captured image to detect the foreign body and characterizes the foreign body by determining a material of the foreign body such as whether the foreign body is a metal or a nonmetal based on the amount of attenuation of the X-ray at the position of the foreign body. This characterization result is sent to the defect storing unit 30. The defect storing unit 30 associates the characterization result provided by the characterizing unit 44 with at least either the position of the corresponding foreign body in the film roll 12 on the space coordinates or the position thereof on the film 10 on the plane coordinates and stores the association as an inspection result. That is, at least either the inspection result in the state of the film roll 12 or the inspection result in the state of the film 10 unwound from the film roll 12 is stored in the defect storing unit 30. At this time, in a case in which information about the size of the foreign body is already stored in the defect storing unit 30, the value for the size of the foreign body may be added to the inspection result. An output unit 30a is connected to the defect storing unit 30 and can output the inspection result stored in the defect storing unit 30. In this case, as the inspection result, a table in which coordinates are associated with presence or absence of a foreign body and a size of the foreign body may be output simply in a numerical format, or data on the plane coordinates or the space coordinates in a map format may be output on a sheet or electronically.

Also, the foreign body may be classified into ranks based on the size and material of the foreign body, and the position of the foreign body and the classified rank may be output as data in a map format. The output inspection result can be attached to the film roll 12 when the film roll 12 is shipped.

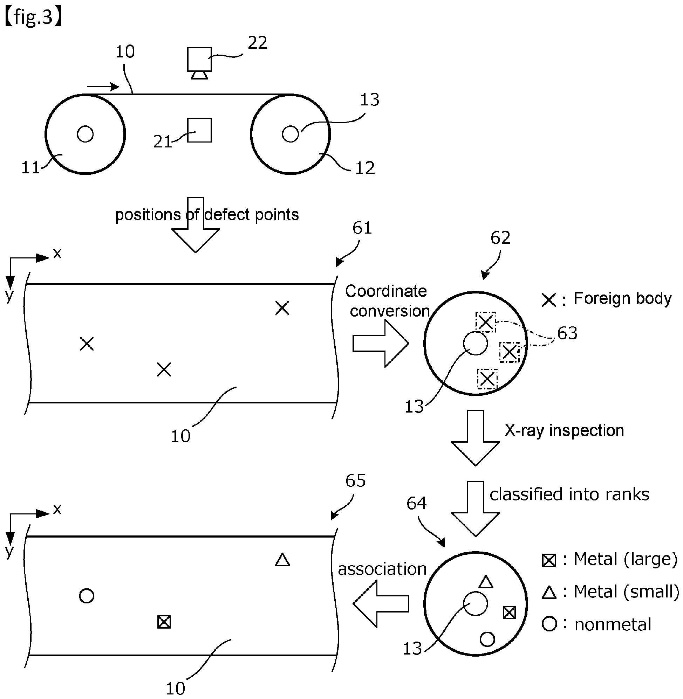

Fig. 3 illustrates an overview of a procedure of a foreign body inspection using the foreign body inspecting device illustrated in Fig. 1. First, the film 10 being conveyed before being wound up into the film roll 12 is subjected to the first foreign body detecting process with use of the optical imaging unit including the light source 21 and the camera 22 to detect positions and sizes of foreign bodies, and positions of defect points determined as defects are detected. A detection result shows where in the plan view of the film 10 the foreign bodies exist as illustrated as a defect point map 61 in the figure. The positional information A (plane coordinates) for each of the foreign bodies corresponding to the defect point map 61 is stored in the defect storing unit 30. Here, when the coordinate converting unit 54 converts the positional information A on the film 10 (plane coordinates) into the positional information B in the film roll 12 (space coordinates) for each of the foreign bodies, spatial positions (three-dimensional positions) of the foreign bodies in the film roll 12 are derived. A defect point map 62 illustrated in Fig. 3 shows an example of arrangement of the foreign bodies on the space coordinates derived in this manner. In the figure, distribution of the foreign bodies projected on a plane perpendicular to the center axis of the film roll 12 is drawn on the defect point map 62, and actually, the information about the spatial positions of the foreign bodies includes information about positions thereof in the depth direction (width direction of the film 10) in the figure. In the present embodiment, only the position of each of the foreign bodies obtained by the conversion into the positional information B in the film roll 12 (space coordinates) and the vicinity thereof (a region 63 illustrated by the dashed-dotted line in the figure) are set as a target region for the X-ray inspection, and the X-ray inspection is performed on this target region as the second foreign body detecting process.

In the second foreign body detecting process using the X-ray, in consideration of the variation in the thickness of the film 10 and the stretch of the film 10, a region along a circle provided on the plane perpendicular to the center axis of the film roll 12, having a center thereof on the center axis of the film roll 12, and having on a circumference thereof the position of the foreign body obtained by the conversion into the space coordinates may be set as the inspection target region using the X-ray. Such setting of the region along the circle as the inspection target region using the X-ray and focusing the inspection target region include adjusting the imaging focus on the position of the foreign body on the converted space coordinates according to the present invention. In a case in which the region along the circle is set as the inspection target region, focusing may be performed by the axial moving mechanism 52 and the radial moving mechanism 53, the motor 51 may then be driven, and the X-ray inspection may be performed while the film roll 12 is rotated around the vertical axis.

When the X-ray inspection is performed on the inspection target region, whether the foreign body is, for example, a metal or a nonmetal is determined from the X-ray attenuation rate. Based on the characterization result, classification of the foreign body (defect point classification) is performed. When the characterization result is applied to the foreign body shown in the defect point map 62, a defect point map 64 is obtained. Here, information about the sizes of the foreign bodies is also taken into consideration, and the foreign bodies are classified into three ranks including (a) a foreign body made of a metal and having a size equal to or larger than a predetermined value, (b) a foreign body made of a metal and having a size smaller than the predetermined value, and (c) a foreign body made of a nonmetal. Furthermore, by adding the information about the classification of the foreign bodies (defect point classification) to the positional information A on the obtained film (plane coordinates) for the foreign bodies, a defect point map 65 showing where on the plane coordinates on the film 10 the foreign bodies are located and the ranks of the foreign bodies (to which of (a) to (c) described above the foreign bodies are applied) can be obtained. The defect point maps 64 and 65 can be output from the defect storing unit 30, and the output defect point maps 64 and 65 can be attached to the film roll 12 as an inspection appendix at the time of shipping of the film roll 12. Meanwhile, as a rank, in addition to (a) to (c), an item (d) a foreign body made of a metal and a nonmetal and having a size equal to or larger than the predetermined value may be provided.

In the above example, the six variables are used as the information for coordinate conversion used to convert the plane coordinates into the space coordinates. However, in a case in which a winding number N when the film is wound up into the film roll 12 is known based on the number of times of rotation of the winder device, for example, the following equation (11) may be used:

$$t = (R_2 - R_1)/N \ldots (11).$$

In a case in which the winding number N is to be used, the winding number N may be used together with the above-described four variables of the total winding length L of the film 10, the outer radius $R_1$ of the core, the outer radius $R_2$ of the film roll 12, and the winding length j, or one of these four variables may be replaced by the winding number N.

Also, as a method for measuring the outer radius $R_2$ of the film roll 12, the method using the length measuring instrument has been described in the above-described example. Known documents describing such a method will be mentioned for reference. Specifically, Japanese Patent Laid-open Publication No. 2000-230810 and Japanese Patent Laid-open Publication No. 1-193604 are included.

Further, as a method for measuring the outer radius $R_2$ of the film roll 12, either one of the following methods (A) and (B) may be used instead of the above method.

(A) A tape measure or the like is applied to the outside of the wound film roll 12 along the circumferential direction to measure the length of the circumference, and the outer radius $R_2$ is derived based on the formula for calculating a length of a circumference from a radius.

(B) By combining the above-described equations (3) and (11), the outer radius $R_2$ can be calculated with the outer radius $R_2$ set as an unknown value and the other variables set as known values.

Still further, as a method for calculating the outer radius $R_1$ of the core, the outer radius $R_2$ of the film roll 12, and the length $R_3$ derived as the distance from the center P of the core 13 to the foreign body 70, the following method (C) may be used.

(C) When the winding rotation speed of the core 13 (film roll 12) and the conveying speed of the film 10 are respectively $\omega$ (rad/s) and v (mm/s), the outer radius R (either $R_2$ or $R_3$) of the film roll 12 when the foreign body is mixed is calculated by the following equation (12):

$$R = v/\omega \ldots (12).$$

Accordingly, by obtaining the rotation speed $\omega$ and the conveying speed v at each of the winding start time, the winding end time, and the generation time of the foreign body 70 and substituting the rotation speed $\omega$ and the conveying speed v into the equation (12), the outer radius $R_1$ of the core, the outer radius $R_2$ of the film roll 12, and the length $R_3$ derived as the distance from the center P of the core 13 to the foreign body 70 are calculated.

Also, in the above-described example, the X-ray source 41 and the X-ray imaging unit 42 for inspecting the foreign body 70 are used in reading the position of the marker 71 attached to the core 13. However, an X-ray source and an X-ray imaging unit for reading the marker 71 may separately be provided. The marker 71 may be a plate or a tape made of resin, instead of a metal, or a sign attached by an operator with a pen or the like. In such a case of using the non-metal marker 71, the position of the marker 71 on the wound film roll 12 may be imaged by, for example, an optical camera separately arranged close to the motor 51.

Further, the marker 71 is provided on the core 13 to determine the winding direction (clockwise or counterclockwise) of the film 10 on the core 13. However, such a marker 71 may not be provided, and the winding direction may be determined when the outer radius of the film roll 12 is measured. That is, the final end of the film 10 is secured to the outer circumferential portion of the film roll 12 by, for example, a tape, and a step is formed on the outer circumferential portion by the final end. Therefore, the winding direction of the film 10 may be determined by detecting the position of the step.

Further, the winding start position of the film 10 on the core 13 is determined by the marker 71. However, as described above, the position of the step at the final end of the film 10 may be obtained, and the tip end portion of the film 10 may virtually be extended as much as the total winding length L of the film 10 from the position in a spiral form toward the inner circumferential side of the film roll 12, to obtain the winding start position of the film 10.

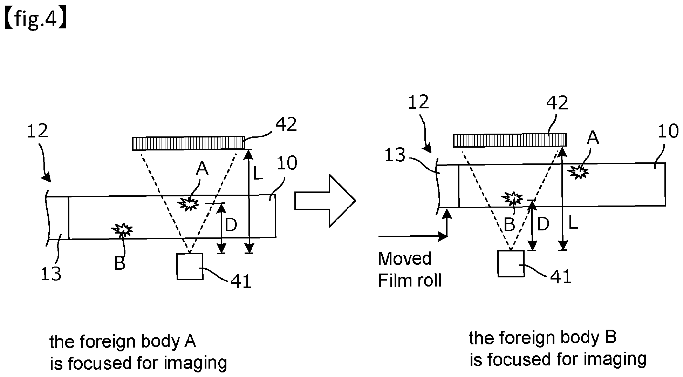

As illustrated on the defect point map 61 or the like in the example illustrated in Fig. 3, the film 10 (that is, the film roll 12) may contain a plurality of foreign bodies. In a case in which the plurality of foreign bodies are mixed, each of the plurality of foreign bodies is sequentially focused for imaging by means of the X-ray source 41 and is imaged using the X-ray. Fig. 4 illustrates adjustment of the imaging focus of the X-ray source in a case in which the plurality of foreign bodies are mixed. Here, it is assumed that the film roll 12 contains foreign bodies A and B. First, the foreign body A is focused for imaging and is imaged with the X-ray. Subsequently, by moving the film roll 12, the foreign body B is focused for imaging and is imaged with the X-ray. When the imaging focus is being moved between the foreign bodies A and B (when the film roll 12 is moving) in this manner, the output of the X-ray source 41 may be turned off, or the X-ray source 41 may be in a standby state to set the output value to be smaller than that at the time of imaging. When the film roll 12 contains another foreign body, focusing on and imaging the subsequent foreign body are similarly repeated. A distance L between the X-ray source 41 and the X-ray imaging unit 42 is kept constant. Further, at the time of focusing, the film roll 12 is moved so that the distance D between the foreign body targeted for focusing and the X-ray source 41 may be constant regardless of the position of the foreign body in the depth direction (up-down direction in the figure) of the film roll 12. Meanwhile, the distance L may be adjusted and set by an operator, for example, or may automatically be adjusted in accordance with the width dimension of the film roll 12 input in advance.

The embodiment of the present invention has been described. After the position of the foreign body is detected, and the foreign body is characterized, the film roll is sorted, that is, used or disposed of based on the characterization result or the like. For example, in a case in which it is determined in the radiation imaging unit using the X-ray that the foreign body is a metal or a nonmetal, the film roll containing the foreign body having a size equal to or larger than a predetermined value and made of a metal is not shipped and is disposed of, for example, or the foreign body is removed. As a method for removing the metal foreign body, a magnet is used in a case in which the foreign body is a magnetic material, and the foreign body is subjected to a treatment such as physical scraping in a case in which the foreign body is a nonmagnetic material. Alternatively, the position of the metal foreign body in the film roll (or on the film) can be figured out based on the above-described defect point map, and only a region of the film roll that does not contain the metal foreign body can be used. Specifically, in a case in which the metal foreign body is contained, the film is unwound from the film roll, is cut at a portion further on the front side than the position at which the foreign body adheres based on the defect point map, is wound, and is shipped as a product. Also, the film is cut again at a portion further on the rear side than the position at which the foreign body adheres, and the film including the portion and a subsequent portion is wound and shipped as a product. In a case in which all of the metal foreign bodies contained have sizes of less than a preset threshold value (for example, 100 $\mu$m), or in which only the non-metal foreign bodies are contained, the film roll may be shipped with the aforementioned inspection appendix or defect point map attached. Further, disposal or shipment may be selected according to the number of foreign bodies contained in the film roll.

As described above, according to the present invention, the foreign body inspection using the optical system is performed while the film is being conveyed, and the foreign body inspection using the radiation is then performed on the film roll into which the film is wound up. Therefore, since the foreign body inspection on the entire film roll is completed by merely selecting a portion from which the foreign body is detected in the optical inspection and irradiating the portion with the radiation, the inspection can be performed quickly and reliably even in a case in which the size of the foreign body is at the level of 100 $\mu$m. That is, to detect a minute foreign body using radiation, it is necessary to do adjustment so as for a radiating region for the radiation to be small according to the size of the foreign body. Therefore, in a case in which the entire film is to be inspected per such radiation region, the inspection time will be extremely long. On the other hand, in a case in which the inspection is to be performed at high speed, the radiation region has to be set to be large, and the minute foreign body cannot be detected. According to the present invention, since only a portion at which a foreign body has been detected in the optical inspection is irradiated with the radiation, the inspection can be completed quickly while the minute foreign body is detected with high accuracy. Accordingly, even in a case in which the film is conveyed at high speed as in the process for manufacturing a battery separator film, the inspecting method according to the present invention can be applied at a practical level, and the life of the radiation source can be extended. For example, in a case in which the viewing field is 10 mm square, and in which a film roll having a roll outside diameter of 300 mm and having a core outside diameter of 200 mm is to be inspected, at least five viewing fields or more need to be imaged in the roll radial direction since the film winding thickness is 50 mm. However, since only a radial position specified using the present invention needs to be imaged, the inspection time can be shortened to 1/5 or less. Since whether the foreign body detected in the optical inspection is a metal or a nonmetal is determined in the radiation inspection, the aforementioned sorting of the film roll can be performed easily.

Further, in a case in which the inspection using the radiation is performed only on a foreign body having a size equal to or larger than a specific dimension among foreign bodies detected in the optical inspection, while only a film roll containing a foreign body at a problematic level for a secondary battery to which the battery separator film is applied is disposed of, for example, a film roll containing a foreign body that is not problematic for the secondary battery can be used for the separator film.

In addition, by storing a portion at which a metal foreign body is detected as space coordinates or plane coordinates, even a film roll in which the metal foreign body is detected does not need to be disposed of, the portion to which the metal foreign body adheres is removed, and the film can efficiently be used. Further, by outputting the space coordinates or the plane coordinates as an inspection result and attaching the result to the film roll, it is possible to perform an operation for efficiently using such a film at a destination for reception of the film roll.

In the example described above, all foreign bodies detected in the optical imaging unit or foreign bodies having a size exceeding a predetermined threshold value are subjected to detection and characterization by means of the radiation imaging unit. Only in a case in which it is determined from a detection result by means of the optical imaging unit that the number of foreign bodies contained in the film roll 12 is equal to or larger than a certain number, the foreign bodies may be detected and characterized by the radiation imaging unit. Also, only in a case in which it is determined from a detection result by means of the optical imaging unit that the number of foreign bodies having a size exceeding a predetermined threshold value contained in the film roll 12 is equal to or larger than a certain number, the foreign bodies may be detected and characterized by the radiation imaging unit. In this case, only the foreign bodies having a size exceeding the threshold value are inspected by the radiation imaging unit.

In the foreign body inspecting device illustrated in Fig. 1, although the imaging focus of the X-ray source 41 is adjusted by moving the film roll 12, the imaging focus may be adjusted by moving the X-ray source 41 and the X-ray imaging unit 42 in a state in which a positional relationship between the X-ray source 41 and the X-ray imaging unit 42 is kept. In short, the imaging focus may be adjusted by changing a relative positional relationship between the X-ray source 41 and the film roll 12 in a state in which the positional relationship between the X-ray source 41 and the X-ray imaging unit 42 is kept. Also, in Fig. 1, the direction of the rotation axis of the motor 51 is drawn in a direction parallel to the direction of gravity. However, the direction of the rotation axis of the motor 51, that is, the direction of the center axis of the film roll 12 at the time of the X-ray inspection is not limited to this, and the direction of the center axis of the film roll 12 may be in the horizontal direction.

In the foreign body inspecting device illustrated in Fig. 1, the film 10 being conveyed discharged from the exit of the slitter 15 that slit-processes the film raw web is subjected to foreign body detection by means of the optical imaging unit. However, a place at which the foreign body detection is performed by the optical imaging unit is not limited to this. In the present invention, the foreign body detection by means of the optical imaging unit can be performed at any arbitrary place at which the film is being conveyed before being wound up. The present invention is also applicable to a film that is not subjected to slit processing. However, in order to reduce the possibility of adhesion of a foreign body to the film after the inspection as much as possible, it is preferable to perform the foreign body detection by means of the optical imaging unit immediately before the film is wound up into a final film roll.

A process for manufacturing the film roll 12 described above will briefly be described, taking the battery separator film as an example. First, a polyolefin resin such as polyethylene and its plasticizer are kneaded to prepare a polyolefin solution. Subsequently, the polyolefin solution is extruded from a die into a sheet and cooled to form a gel sheet. Subsequently, after stretching the gel sheet, the plasticizer is removed and washed to form a microporous film, which is then heat-treated and wound up into a roll as a raw web. Subsequently, the raw web is unwound from the roll, is slit to have a predetermined width dimension, and is wound up into another roll having a shorter width dimension. In this manner, the roll having the shorter width dimension is delivered to a manufacturer that is to use a battery separator film such as a battery manufacturer.

INDUSTRIAL APPLICABILITY

The manufacturing process to which the inspecting method according to the present invention is applied is appropriate not only for a process for manufacturing a battery separator film made of polyolefin but also for a process for manufacturing a coating separator, a nonwoven fabric battery separator, a capacitor film, an MLCC release film, and the like.

DESCRIPTION OF REFERENCE SIGNS

10: Film
11: Unwinding roll
12: Film roll
13: Core
15: Slitter
21: Light source
22: Optical camera
23: Image processing unit
30: Defect storing unit
41: X-ray source
42: X-ray imaging unit
43: Distance adjusting mechanism
44: Characterizing unit
51: Motor
52: Axial moving mechanism
53: Radial moving mechanism
54: Coordinate converting unit
55: Movement control unit
70: Foreign body X
80: One inspection viewing field
P: Origin in positional information B on film roll
$R_1$: Outer radius of core
$R_2$: Outer radius of film roll
$R_3$: Length derived as distance from center P to foreign body
S: Area of region in which film is wound
L: Total winding length
j: Winding length to position to which foreign body adheres
$\theta$: Rotation angle in film roll ($\theta$ coordinate)

**Claims**

1. A method for inspecting a foreign body mixed in a film roll, the method comprising:

   a first foreign body detecting process for detecting a foreign body on a film being conveyed before being wound up into the film roll with using an optical imaging unit and obtaining foreign body information including at least positional information A on the film (plane coordinates) for the foreign body;
   a process for winding up the film on a core as the film roll after the first foreign body detecting process;
   a converting process for converting a position of the foreign body on the positional information A (plane coordinates) into positional information on positional information B in the wound film roll (space coordinates); and
   a second foreign body detecting process for using a radiation imaging unit to the film roll, focusing the radiation imaging unit to adjust imaging focus on a foreign body targeted for detection and characterization based on the positional information B (space coordinates) for the foreign body, and emitting radiation by means of the radiation imaging unit to detect and characterize the targeted foreign body.

2. The method for inspecting a foreign body according to claim 1, wherein, in a case in which a plurality of foreign bodies are detected in the first foreign body detecting process, in the second foreign body detecting process, each piece of positional information B (space coordinates) for each of the plurality of foreign bodies is sequentially focused for imaging to detect and characterize each of the foreign bodies.

3. The method for inspecting a foreign body according to claim 1 or 2, wherein the optical imaging unit is a direct transmission optical system, and only a foreign body detected as a dark defect in the first foreign body detecting process is subjected to the second foreign body detecting process.

4. The method for inspecting a foreign body according to any one of claims 1 to 3, wherein the foreign body information includes information about a size of the detected foreign body, and only a foreign body having a size equal to or larger than a preset threshold value is subjected to the second foreign body detecting process.

5. The method for inspecting a foreign body according to any one of claims 1 to 4, comprising an inspection result mapping process for, after the second foreign body detecting process, associating a characterization result in the second foreign body detecting process with the position of the foreign body on the positional information A (plane coordinates) and storing the association as an inspection result.

6. The method for inspecting a foreign body according to claim 5, wherein the inspection result from the association in the inspection result mapping process is output.

7. The method for inspecting a foreign body according to any one of claims 1 to 6, wherein the film is a battery separator film.

8. The method for inspecting a foreign body according to any one of claims 1 to 7,
wherein, before the converting process, at least three processes are performed out of
a process for measuring a total winding length of the film wound up into the film roll,
a process for measuring an outer radius of the core,
a process for measuring an outer radius of the film roll into which the film is wound up, and
a process for measuring a winding number of the film in the film roll, and
wherein the converting process is performed based on a measurement result obtained in the at least three processes.

9. An inspecting device inspecting a foreign body mixed in a film roll into which a film is wound up, the inspecting device comprising:

   an optical imaging unit imaging a film being conveyed before being wound up into the film roll;
   an image processing unit detecting a foreign body from an image captured in the optical imaging unit;
   a storing unit storing foreign body information including at least a position of the foreign body on positional information A on the film (plane coordinates) for the foreign body detected in the image processing unit;
   a converting unit converting the position of the foreign body on the positional information A (plane coordinates) into a position of the foreign body on positional information B on the wound film roll (space coordinates);
   a radiation imaging unit detecting radiation emitted from a radiation source and performing imaging;
   a focusing unit moving the radiation source relatively to the film roll to focus the radiation imaging unit in order for the position of the foreign body on the converted positional information B (space coordinates) to be focused on for imaging; and
   a characterizing unit detecting and characterizing the foreign body based on radiation intensity of the radiation imaging unit.

10. The inspecting device according to claim 9, comprising a charactering unit determining whether a foreign body in the film roll is a metal or a nonmetal.

11. The inspecting device according to claim 9 or 10, comprising an output unit associating at least either the position of the foreign body on the film as a result of the foreign body inspection by means of an optical system executed in advance or a position of the foreign body in the film roll with a result of characterizing the foreign body and outputting the association.

12. A film roll into which a film is wound up, the film roll comprising:
an inspection appendix describing association of a position of a foreign body based on a result of foreign body detection optically performed on the film being conveyed before being wound up into the film roll with a result of characterization for the foreign body performed by irradiating the film roll with radiation.

13. A method for manufacturing a film roll including a process for manufacturing a film roll by a process for winding up a film, the method comprising:

   a process for inspecting a foreign body by means of the method for inspecting a foreign body according to any one of claims 1 to 8,
   wherein the first defect detecting process is performed before the process for winding up the film, and

wherein the second defect detecting process is performed after the process for winding up the film.

14. The method for manufacturing a film roll according to claim 13, wherein the process for winding up the film is a process for winding up a film slit from a film raw web.

【fig.1】

【fig.2】

(a)

(b)

$$\Delta t = [ (R_3 - R_1) \bmod t ]$$

【fig.3】

positions of defect points

Coordinate conversion

X : Foreign body

X-ray inspection

classified into ranks

association

⊠ : Metal (large)
△ : Metal (small)
○ : nonmetal

【fig.4】

the foreign body A
is focused for imaging

the foreign body B
is focused for imaging

【fig.5】

【fig.6】

【fig.7】

$$R_2 \text{ (known value)}$$

$$R_1 \text{ (known value)}$$

$$S = \pi \left( R_2{}^2 - R_1{}^2 \right)$$

$$L \text{ (known value)}$$

$$t = S / L$$

$$j \text{ (known value)}$$

$$R_3 = \left\{ \left( j \, t / \pi \right) + R_1{}^2 \right\}^{1/2}$$

$$\Delta t = \left( R_3 - R_1 \right) \bmod t$$

$$\theta = 2\pi \times \Delta t / t$$

## INTERNATIONAL SEARCH REPORT

| | International application No. |
|---|---|
| | PCT/JP2019/009885 |

**A. CLASSIFICATION OF SUBJECT MATTER**
Int.Cl. G01N23/18(2018.01)i, G01B11/00(2006.01)i, G01N21/892(2006.01)i

According to International Patent Classification (IPC) or to both national classification and IPC

**B. FIELDS SEARCHED**

Minimum documentation searched (classification system followed by classification symbols)
Int.Cl. G01N23/00-23/2276, G01N21/84-21/958, G01B11/00-11/30, G01B15/00-15/08

Documentation searched other than minimum documentation to the extent that such documents are included in the fields searched
| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-525691 A (SCHOTT AG) 25 August 2016 & US 2016/0161423 A1 & WO 2015/014593 A1 & DE 102013108308 A1 | 1–14 |
| A | JP 2003-315275 A (DAIO PAPER CORP.) 06 November 2003 (Family: none) | 1–14 |
| A | JP 2001-41898 A (MITSUBISHI CHEMICAL CORP.) 16 February 2001 (Family: none) | 1–14 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 03 June 2019 (03.06.2019) | 11 June 2019 (11.06.2019) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

24

**INTERNATIONAL SEARCH REPORT**

| International application No. |
| --- |
| PCT/JP2019/009885 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 9-133638 A (MITSUI TOATSU CHEMICALS, INC.) 20 May 1997 (Family: none) | 1-14 |
| A | WO 2006/137385 A1 (GUNZE LIMITED) 28 December 2006 & CN 101198859 A & KR 10-2008-0028922 A | 1-14 |
| A | JP 2010-534834 A (3M INNOVATIVE PROPERTIES CO.) 11 November 2010 & US 2009/0028417 A1 & WO 2009/014939 A2 & KR 10-2010-0053577 A & CN 101849213 A | 1-14 |
| A | US 2009/0088889 A1 (HELLSTROM et al.) 02 April 2009 & WO 2009/042638 A2 & CN 101815665 A | 1-14 |
| P, A | JP 2018-92890 A (SUMITOMO CHEMICAL CO., LTD.) 14 June 2018 & US 2018/0159102 A1 & CN 108132262 A & KR 10-2018-0062374 A | 1-14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5673621 B
- JP 2015044602 A
- JP 5126645 B
- JP 2000230810 A
- JP 1193604 A